# EUROPEAN PATENT SPECIFICATION

(11) **EP 4 155 586 B1**
(45) Date of publication and mention of the grant of the patent: **26.02.2025**
(21) Application number: 21809088.4
(22) Date of filing: 21.01.2021
(51) Int. Cl.: F16J 12/00, F25B 43/00, F25B 13/00, F25B 41/40

(54) **PRESSURE VESSEL AND REFRIGERATION DEVICE**
DRUCKBEHÄLTER UND KÜHLVORRICHTUNG
RÉCIPIENT SOUS PRESSION ET DISPOSITIF DE RÉFRIGÉRATION

(30) Priority: 21.05.2020 JP 2020088945
(43) Date of publication of application: 29.03.2023
(73) Proprietor: Daikin Industries, Ltd., Osaka-shi, Osaka 530-0001 (JP)
(72) Inventor: HAMADATE, Junichi, Osaka-shi, Osaka 530-8323 (JP); JINDOU, Masanori, Osaka-shi, Osaka 530-8323 (JP); MATSUDA, Hiroaki, Osaka-shi, Osaka 530-8323 (JP); KOMAKI, Ayumi, Osaka-shi, Osaka 530-8323 (JP)
(74) Representative: Hoffmann Eitle
(86) International application number: PCT/JP2021/001971
(87) International publication number: WO 2021/234999

(56) References cited:
- CN-A- 103 983 055
- CN-A- 104 588 964
- CN-U- 203 405 040
- CN-U- 204 321 422
- CN-Y- 200 965 378
- JP-A- 2004 169 965
- JP-A- 2011 208 831
- JP-A- 2016 200 315
- JP-A- H09 112 752
- JP-A- H09 112 752
- JP-U- S61 164 967
- KR-A- 20180 086 747

## Description

### TECHNICAL FIELD

The present invention relates to a pressure vessel.

### BACKGROUND ART

An air conditioner configured to execute refrigeration cycle operation includes a refrigerant circuit having pressure vessels such as a compressor, an accumulator, and a receiver, and a refrigerant pipe connected to each of the pressure vessels. Patent Literature 1 discloses adopting a refrigerant pipe made of less expensive stainless steel in place of a refrigerant pipe made of copper exerting excellent processability such as bending and excellent heat conductivity.

### SUMMARY OF THE INVENTION

### [TECHNICAL PROBLEM]

The pressure vessels provided on the refrigerant circuit each include a vessel body, an inlet pipe causing a refrigerant to flow into the vessel body, and an outlet pipe causing the refrigerant to flow out of the vessel body. Typically, the vessel body is made of iron whereas the inlet pipe and the outlet pipe are made of copper. Similarly to the refrigerant pipe according to JP 2010-151327 A, the inlet pipe and the outlet pipe may be made of stainless steel in consideration of cost or the like.

However, the inlet pipe and the outlet pipe made of stainless steel may not be able to be connected with the vessel body made of iron in a manner similar to a conventional method. A pressure vessel and a refrigeration apparatus are also known from CN 103 983 055 A that describes a vapor-liquid separator input and output structure which comprises a tank, an upper end cover, a stainless steel input pipe and a stainless steel output pipe, wherein the upper end cover covers the end part of the tank and is provided with an inlet, an outlet and flanging parts at the inlet and the outlet, the stainless steel input pipe penetrates through the inlet, the stainless steel output pipe penetrates through the outlet, the outer end of the stainless steel input pipe and the outer end of the stainless steel output pipe are respectively provided with a flaring part, a copper insertion pipe is inserted into each flaring part, and the bottom end of each copper insertion pipe, each flaring part and each flanging part are fixed in a welding manner for forming a five-layer structure consisting of a copper insertion pipe, a first flux layer, a flaring part, a second flux layer and an upper end cover flanging part from inside to outside. Moreover, a pressure vessel and a refrigeration apparatus are also known from JP H09 112752 A, and CN 104 588 964 A.

It is an object of the present invention to provide a pressure vessel and a refrigeration apparatus, which allow connection, in a manner similar to the conventional method, between a vessel body and inlet and outlet pipes at least one of which is made of stainless steel.

### [SOLUTION TO PROBLEM]

(1) The present invention provides a pressure vessel according to claim 1.

According to the above configuration, the inlet pipe and/or the outlet pipe includes the first portion made of stainless steel and the second portion made of a material whose main component is copper, and the second portion is connected to the vessel body. The second portion can thus be connected to the vessel body in a manner similar to a conventional technique for an inlet pipe and/or an outlet pipe made of copper.

(2) Preferably, the first portion has an outer circumferential surface connected with an inner circumferential surface of the second portion, and
the second portion has an end surface on the second side in the pipe axial direction, the end surface being disposed flush with an end surface on the second side in the pipe axial direction of the first portion, or projecting toward the second side in the pipe axial direction than the end surface of the first portion.

According to this configuration, the first portion does not project toward the second side in the pipe axial direction than the second portion, for reduction in entire size of the inlet pipe and/or the outlet pipe.

(3) Preferably, a different second pipe is connected to an end on the second side in the pipe axial direction of the second portion.

(4) Preferably, the vessel body includes a joint tube made of iron, and the second portion is connected to the joint tube.

(5) Preferably, the second portion is connected to an end on the first side in the pipe axial direction of the joint tube, and
a different third pipe is connected to an end on the second side in the pipe axial direction of the j oint tube.

According to such a configuration, the inlet pipe and/or the outlet pipe and the third pipe disposed in the vessel body can be connected to each other via the joint tube.

(6) Preferably, the end surface on the second side in the pipe axial direction of the second portion projects toward the second side in the pipe axial direction than the end surface on the second side in the pipe axial direction of the first portion.

According to this configuration, the second portion and the third pipe connected via the joint tube are less likely to form any gap therebetween, inhibiting entry or the like of the refrigerant into the gap.

(7) Preferably, the second portion has a portion extending into the vessel body.

According to such a configuration, the inner pipe disposed in the vessel body can be constituted by the second portion thus extended, achieving reduction in the number of components of the pipe.

(8) Preferably, the end on the second side in the pipe axial direction of the first portion is provided with a minor diameter portion reduced in outer diameter, and
the minor diameter portion has an outer circumferential surface connected to the inner circumferential surface of the second portion.

According to such a configuration, the minor diameter portion of the first portion is inserted to the second portion and the end of the second portion is made in contact with a portion around a proximal end of the minor diameter portion, for positioning in the pipe axial direction of the first portion and the second portion.

(9) Preferably, the first portion has a portion overlapped with the vessel body in a pipe diameter direction.

According to this configuration, the first portion stronger than the second portion is overlapped with the vessel body in the pipe diameter direction, for improvement in connection strength between the vessel body and the inlet pipe and/or the outlet pipe.

(10) Preferably, the end on the first side in the pipe axial direction of the first portion is provided with a plated portion made of a material whose main component is copper or a tube made of a material whose main component is copper.

According to this configuration, a refrigerant pipe made of copper can be connected easily to the end of the first portion made of stainless steel, with use of an inexpensive brazing material.

(11) The present invention provides a refrigeration apparatus including the pressure vessel according to any one of (1) to (10) described above.

### BRIEF DESCRIPTION OF DRAWINGS

FIG. 1 is a schematic configuration diagram of a refrigeration apparatus including a pressure vessel according to a first embodiment of the present invention.
FIG. 2 is a front view (partially sectional view) of an exemplary pressure vessel.
FIG. 3 is a perspective view of another exemplary pressure vessel.
FIG. 4 is an enlarged sectional view of a connecting portion between a pipe and a vessel body of the pressure vessel.
FIG. 5 is an enlarged sectional view of a connecting portion between a pipe and a vessel body of a pressure vessel according to a second embodiment.
FIG. 6 is an enlarged sectional view of a connecting portion between a pipe and a vessel body of a pressure vessel according to a third embodiment.
FIG. 7 is an enlarged sectional view of a connecting portion between a pipe and a vessel body of a pressure vessel according to a fourth embodiment.
FIG. 8 is an enlarged sectional view of a connecting portion between a pipe and a vessel body of a pressure vessel according to a fifth embodiment.
FIG. 9 is an enlarged sectional view of a connecting portion between a pipe and a vessel body of a pressure vessel according to a sixth embodiment.

### DETAILED DESCRIPTION

Embodiments of the present invention will be described in detail hereinafter with reference to the accompanying drawings.

### [First embodiment]

Description will be made hereinafter to embodiments of the present invention with reference to the drawings.

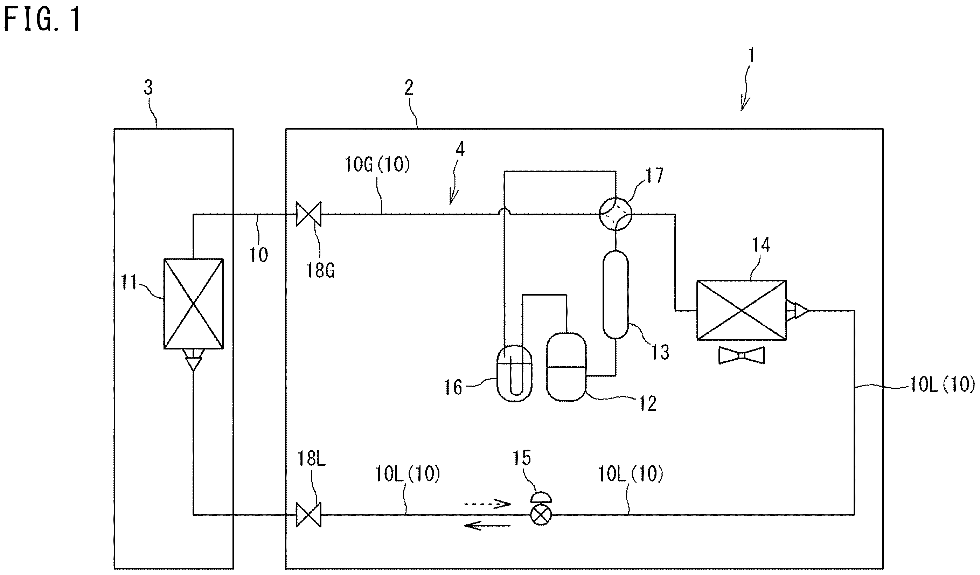

FIG. 1 is a schematic configuration diagram of a refrigeration apparatus including a pressure vessel according to the first embodiment of the present invention.

A refrigeration apparatus 1 exemplifies an air conditioner configured to condition indoor temperature and indoor humidity, and includes an outdoor unit 2 disposed outdoors and an indoor unit 3 disposed indoors. The outdoor unit 2 and the indoor unit 3 are connected to each other via a refrigerant pipe 10.

The refrigeration apparatus 1 includes a refrigerant circuit 4 configured to execute vapor compression refrigeration cycle operation. The refrigerant circuit 4 includes a plurality of element components and the refrigerant pipe 10 connecting the plurality of element components. The refrigerant circuit 4 includes, as the element components, an indoor heat exchanger 11, a compressor 12, a muffler 13, an outdoor heat exchanger 14, an expansion mechanism 15, an accumulator 16, a four-way switching valve (switching mechanism) 17, and the like, which are connected via the refrigerant pipe 10. The refrigerant pipe 10 includes a liquid pipe 10L and a gas pipe 10G. The liquid pipe 10L and the gas pipe 10G are provided with a liquid shutoff valve 18L and a gas shutoff valve 18G, respectively.

The indoor heat exchanger 11 is provided in the indoor unit 3 and executes heat exchange between a refrigerant and indoor air. Examples of the indoor heat exchanger 11 include a fin-and-tube heat exchanger of a cross-fin type and a heat exchanger of a microchannel type. The indoor heat exchanger 11 is provided therearound with an indoor fan (not depicted) configured to send indoor air to the indoor heat exchanger 11 and send conditioned air to indoors.

The compressor 12, the muffler 13, the outdoor heat exchanger 14, the expansion mechanism 15, the accumulator 16, and the four-way switching valve 17 are provided in the outdoor unit 2. The compressor 12 is configured to compress a refrigerant sucked from an inlet pipe and discharge the compressed refrigerant from an outlet pipe. Examples of the compressor 12 include various compressors such as a scroll compressor.

The muffler 13 inhibits pressure pulsation of the refrigerant discharged from the compressor 12. The outlet pipe of the compressor 12 and the four-way switching valve 17 may interpose an oil separator in place of or in addition to the muffler 13. The oil separator is configured to separate lubricant from fluid mixture that contains the lubricant and a refrigerant and is discharged from the compressor 12.

The outdoor heat exchanger 14 executes heat exchange between the refrigerant and outdoor air. Examples of the outdoor heat exchanger 14 include a fin-and-tube heat exchanger of a cross-fin type and a heat exchanger of a microchannel type. The outdoor heat exchanger 14 is provided therearound with an outdoor fan configured to send outdoor air to the outdoor heat exchanger 14.

The expansion mechanism 15 is disposed between the outdoor heat exchanger 14 and the indoor heat exchanger 11 on the refrigerant pipe 10 of the refrigerant circuit 4, and expands the incoming refrigerant to be decompressed to have predetermined pressure. Examples of the expansion mechanism 15 include an electronic expansion valve having a variable opening degree, and a capillary tube.

The accumulator 16 is disposed between a suction port of the compressor 12 and the four-way switching valve 17 in the refrigerant circuit 4, and is configured to separate the incoming refrigerant into a gas refrigerant and a liquid refrigerant. The gas refrigerant thus separated by the accumulator 16 is sucked into the compressor 12.

The four-way switching valve 17 is configured to be switchable between a first state indicated by a solid line and a second state indicated by a broken line in FIG. 1. The four-way switching valve 17 is switched into the first state while the air conditioner 1 executes cooling operation, and the four-way switching valve 17 is switched into the second state while the air conditioner 1 executes heating operation.

### (Specifically exemplary pressure vessel)

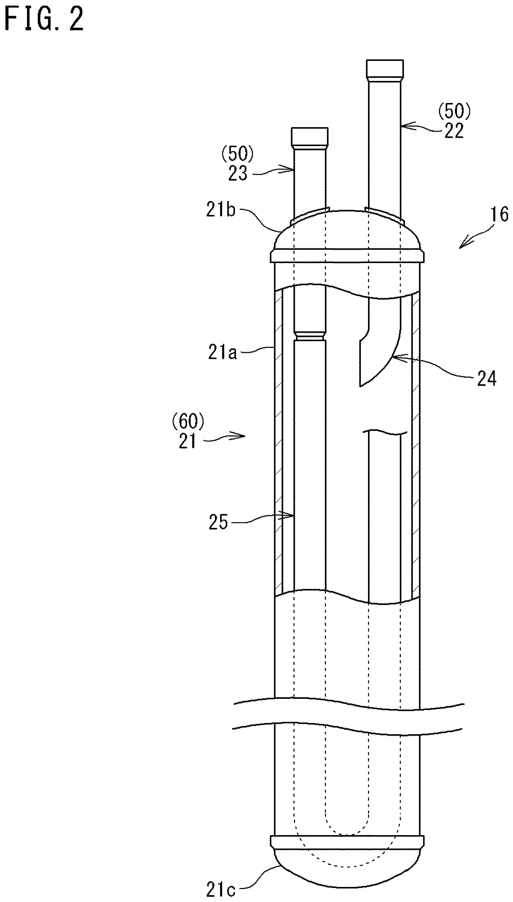

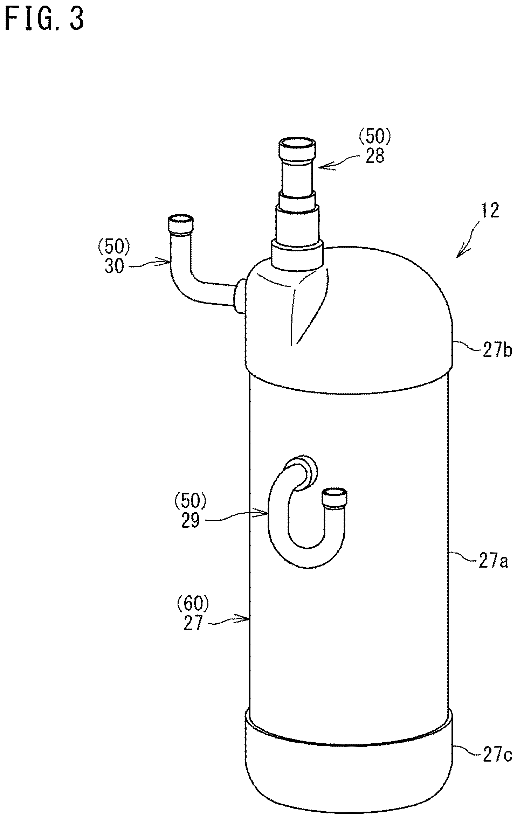

FIG. 2 is a front view (partially sectional view) of an exemplary pressure vessel according to the first embodiment of the present invention. FIG. 3 is a perspective view of another exemplary pressure vessel.

The pressure vessel depicted in FIG. 2 is the accumulator 16. The accumulator 16 includes a vessel body 21, an inlet pipe 22, and an outlet pipe 23. The vessel body 21 constitutes a primary part of the accumulator 16 and is configured to contain a refrigerant. The vessel body 21 includes a trunk 21a having a cylindrical shape, and two lids 21b and 21c closing both longitudinal ends of the trunk 21a.

The present specification will also refer to an axial direction including a center in a transverse section of a pipe such as the inlet pipe 22 or the outlet pipe 23, as a "pipe axial direction". A radial direction of a pipe perpendicular to the pipe axial direction will also be called a "pipe diameter direction". An end or an end surface on a first side in the pipe axial direction of the pipe will also be called a "first end" or a "first end surface", and an end or an end surface on a second side in the pipe axial direction will also be called a "second end" or a "second end surface". Each of the "first end" and the "second end" in the pipe axial direction of the pipe refers to a region positioned at an end in the pipe axial direction of the pipe, such as a region adjacent to the "first end surface" or the "second end surface", and may not necessarily include the "first end surface" or the "second end surface" in the pipe axial direction.

The inlet pipe 22 is provided on an upper part of the vessel body 21 (the upper lid 21b). The inlet pipe 22 has a first end (upper end) in the pipe axial direction, which projects from the vessel body 21. The first end of the inlet pipe 22 is connected to the four-way switching valve 17 (see FIG. 1) via the refrigerant pipe 10. The inlet pipe 22 has a second end (lower end) in the pipe axial direction, which is disposed in the vessel body 21.

The outlet pipe 23 is disposed on the upper part of the vessel body 21 (upper lid 21b) and adjacent to the inlet pipe 22. The outlet pipe 23 has a first end (upper end) in the pipe axial direction, which projects from the vessel body 21. The first end of the outlet pipe 23 is connected to the compressor 12 (see FIG. 1) via the refrigerant pipe 10. The outlet pipe 23 has a second end (lower end) in the pipe axial direction, which is disposed in the vessel body 21.

The accumulator 16 includes two inner pipes 24 and 25 disposed in the vessel body 21. The inner pipe 24 extends downward from the second end of the inlet pipe 22. The inner pipe 25 extends downward from the second end of the outlet pipe 23, is bent upward into a U shape in a lower part of the vessel body 21, and extends into the upper part of the vessel body 21.

The pressure vessel depicted in FIG. 3 is the compressor 12. The compressor 12 includes a vessel body 27, an inlet pipe 28, an outlet pipe 29, and an injection pipe 30. The vessel body 27 constitutes a primary part of the compressor 12 and is configured to contain a refrigerant. The vessel body 27 accommodates a motor, a compression mechanism, and the like. The vessel body 27 includes a trunk 27a having a cylindrical shape, and lids 27b and 27c closing both longitudinal ends of the trunk 27a.

The inlet pipe 28 is provided on an upper part of the vessel body 27 (the upper lid 27b). The inlet pipe 28 has a first end (upper end) in the pipe axial direction, which projects from the vessel body 27. The first end of the inlet pipe 28 is connected to the accumulator 16 (see FIG. 1) via the refrigerant pipe 10. The inlet pipe 28 has a second end in the pipe axial direction, which is disposed in the vessel body 27.

The outlet pipe 29 is provided halfway (on the trunk 27a) in a vertical direction of the vessel body 27. The outlet pipe 29 has a first end in the pipe axial direction, which projects from the vessel body 27. The first end of the outlet pipe 29 is connected to the muffler 13 (see FIG. 1) via the refrigerant pipe 10. The outlet pipe 29 has a second end in the pipe axial direction, which is disposed in the vessel body 27.

The injection pipe 30 is provided on the upper part of the vessel body 27 (the upper lid 27b). The injection pipe 30 causes an intermediate pressure refrigerant to flow from a subcooler or the like (not depicted) into the vessel body 27. The injection pipe 30 is accordingly one kind of the inlet pipe 28. The injection pipe 30 has a first end in the pipe axial direction, which projects from the vessel body 27. The injection pipe 30 has a second end in the pipe axial direction, which is disposed in the vessel body 27.

The inlet pipes 22 and 28 (including the injection pipe 30) and the outlet pipes 23 and 29 in the pressure vessels such as the accumulator 16 and the compressor 12 are structured as described below. In the following description, the inlet pipes 22, 28, and 30 and the outlet pipes 23 and 29 will be collectively called a "first pipe" denoted by reference sign 50. The vessel bodies 21 and 27 will be denoted by reference sign 60 without distinction among the accumulator 16, the compressor 12, and the like.

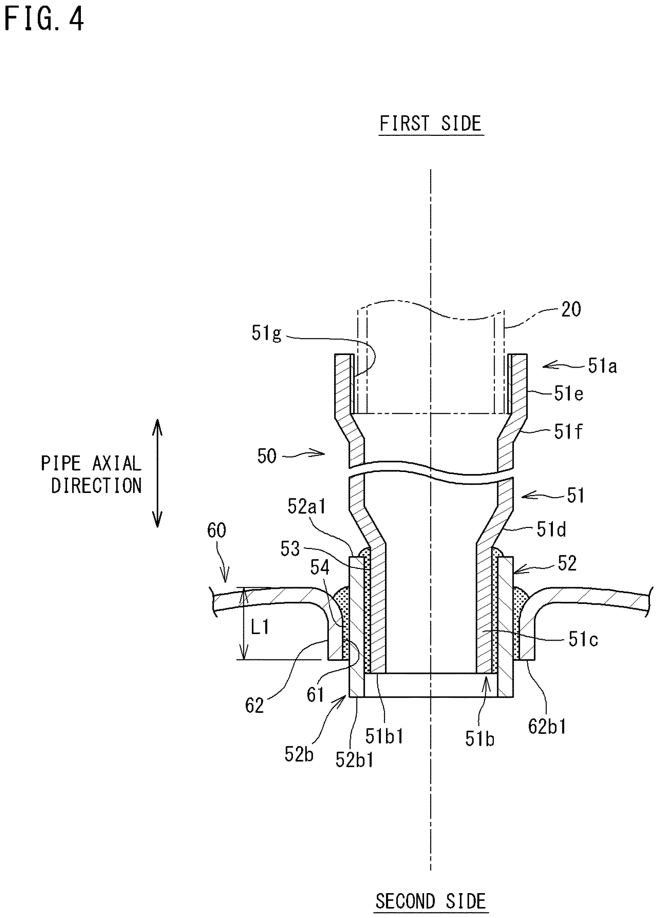

FIG. 4 is an enlarged sectional view of a connecting portion between a pipe and the vessel body of the pressure vessel.

A vessel body 60 is made of iron. The vessel body 60 is provided with an opening 61 configured to receive the first pipe 50. The opening 61 is constituted by an inner circumferential surface of a sleeve 62 bent toward inside the vessel body 60 to have a cylindrical shape. The sleeve 62 may alternatively be bent toward outside the vessel body 60 to have a cylindrical shape. The sleeve 62 may exemplarily be formed by burring.

The first pipe 50 includes a first portion 51 and a second portion 52. The first portion 51 is made of stainless steel. The first portion 51 is made of SUS304, SUS304L, SUS436L, SUS430, or the like. The first portion 51 has a first end 51a in the pipe axial direction, which is disposed outside the vessel body 60. The first portion 51 has a second end 51b in the pipe axial direction, at least part of which is disposed in the vessel body 60 and is connected to the second portion 52.

The second end 51b of the first portion 51 is provided with a minor diameter portion 51c reduced in outer diameter, while a stepped portion 51d is interposed therebetween. The first end 51a of the first portion 51 is provided with a major diameter portion 51e increased in outer diameter, while a stepped portion 51f is interposed therebetween. The major diameter portion 51e has an inner circumferential surface provided with a plated portion 51g made of a material whose main component is copper. A refrigerant pipe 20 made of a material whose main component is copper is brazed with use of a phosphor copper brazing material or the like to the plated portion 51g.

The second portion 52 is made of copper or copper alloy, which is a material whose main component is copper. The second portion 52 has a cylindrical shape. The second portion 52 has an inner circumference into which the minor diameter portion 51c of the first portion 51 is inserted. The second portion 52 has an inner circumferential surface facing an outer circumferential surface of the minor diameter portion 51c of the first portion 51 in the pipe diameter direction. The inner circumferential surface of the second portion 52 and the outer circumferential surface of the minor diameter portion 51c of the first portion 51 are brazed to each other. The inner circumferential surface of the second portion 52 and the outer circumferential surface of the minor diameter portion 51c accordingly interpose a brazed portion 53 made of a brazing material.

The second portion 52 is restricted from moving toward the first side in the pipe axial direction relatively to the first portion 51 to be positioned, by the stepped portion 51d positioned at a proximal end of the minor diameter portion 51c. The second portion 52 has a second end surface 52b1 in the pipe axial direction, which is disposed closer to the second side in the pipe axial direction (lower side in FIG. 4) than a second end surface 51b1 in the pipe axial direction of the first portion 51.

The second portion 52 is inserted to the sleeve 62 of the vessel body 60 and is fixed to the sleeve 62. Specifically, the second portion 52 has an outer circumferential surface disposed to face the inner circumferential surface of the sleeve 62 of the vessel body 60 in the pipe diameter direction. The outer circumferential surface of the second portion 52 and the inner circumferential surface of the sleeve 62 are brazed to each other. The outer circumferential surface of the second portion 52 and the inner circumferential surface of the sleeve 62 accordingly interpose a brazed portion 54 made of a brazing material.

The second portion 52 and the sleeve 62 are connected to each other by brazing with use of a brass brazing material. Typical examples of such brazing include burner brazing. The burner brazing is different from "furnace brazing" and is executed manually or with use of a brazing device including a burner.

A conventional pressure vessel includes inlet and outlet pipes made of copper (hereinafter, also called the "inlet pipe and the like") and brazed with use of the brass brazing material to the vessel body 60 made of iron. If the inlet pipe and the like are entirely made of stainless steel, connection of the inlet pipe and the like to the vessel body 60 made of iron needs a silver brazing material that is more expensive than the brass brazing material. According to the present embodiment, the first pipe 50 includes the first portion 51 made of stainless steel and the second portion 52 made of a material whose main component is copper (made of copper or copper alloy), and the second portion 52 is connected to the vessel body 60. Accordingly, similarly to the conventional pressure vessel, the first pipe 50 including the first portion 51 made of stainless steel can be connected to the vessel body 60 by brazing with use of the brass brazing material.

The second portion 52 has a first end surface 52a1 in the pipe axial direction, which is disposed closer to the first side in the pipe axial direction (upper side in FIG. 4) than a first end in the pipe axial direction, of the sleeve 62 of the vessel body 60. The second end surface 52b1 in the pipe axial direction of the second portion 52 is disposed closer to the second side in the pipe axial direction (lower side in FIG. 4) than a second end surface 62b1 in the pipe axial direction of the sleeve 62 of the vessel body 60. The second portion 52 accordingly projects from both ends in the pipe axial direction of the sleeve 62.

The second end surface 51b1 in the pipe axial direction of the first portion 51 is disposed closer to the second side in the pipe axial direction (lower side in FIG. 4) than a second end surface 62b1 in the pipe axial direction of the sleeve 62 of the vessel body 60. The minor diameter portion 51c of the first portion 51 is disposed to be overlapped with the sleeve 62 of the vessel body 60 in the pipe diameter direction. Specifically, the minor diameter portion 51c of the first portion 51 is overlapped in the pipe diameter direction with entire length L1 in the pipe axial direction of the sleeve 62 of the vessel body 60.

The first portion 51 and the second portion 52 of the first pipe 50 are connected by furnace brazing and are placed in a high-temperature environment in a furnace. The second portion 52 made of copper may thus have coarsened copper crystal grains to cause strength deterioration. According to the present embodiment, the first portion 51 made of stainless steel and the vessel body 60 made of iron are disposed to be overlapped with each other in the pipe diameter direction. The second portion 52 is not provided by itself where the vessel body 60 and the first pipe 50 are connected to each other, and the second portion 52 is overlapped with at least one of the vessel body 60 and the first portion 51 in the pipe diameter direction. Strength deterioration of the second portion 52 is accordingly compensated with the vessel body 60 and the first portion 51.

The second end surface 51b1 of the first portion 51 is disposed closer to the first side in the pipe axial direction than the second end surface 52b1 of the second portion 52. The first pipe 50 can thus be reduced in entire length in comparison to another case where the second end surface 51b1 of the first portion 51 is disposed closer to the second side in the pipe axial direction than the second end surface 52b1 of the second portion 52, in other words, a case where the second end 51b of the first portion 51 projects toward the second side in the pipe axial direction than a second end 52b of the second portion 52. This enables increase in the number of first pipes 50 simultaneously provided in the furnace for furnace brazing between the first portion 51 and the second portion 52 of each of the first pipes 50, which achieves improvement in production efficiency of the first pipes 50. The second end surface 51b1 of the first portion 51 and the second end surface 52b1 of the second portion 52 may alternatively be disposed flush with each other.

The second portion 52 may alternatively be provided at the second end 51b of the first portion 51 in a state where the second end surface 52b1 is disposed closer to the first side in the pipe axial direction (upper side in FIG. 4) than the second end surface 51b1 of the first portion 51, though functional effects described above will not be achieved in this case.

### [Second embodiment]

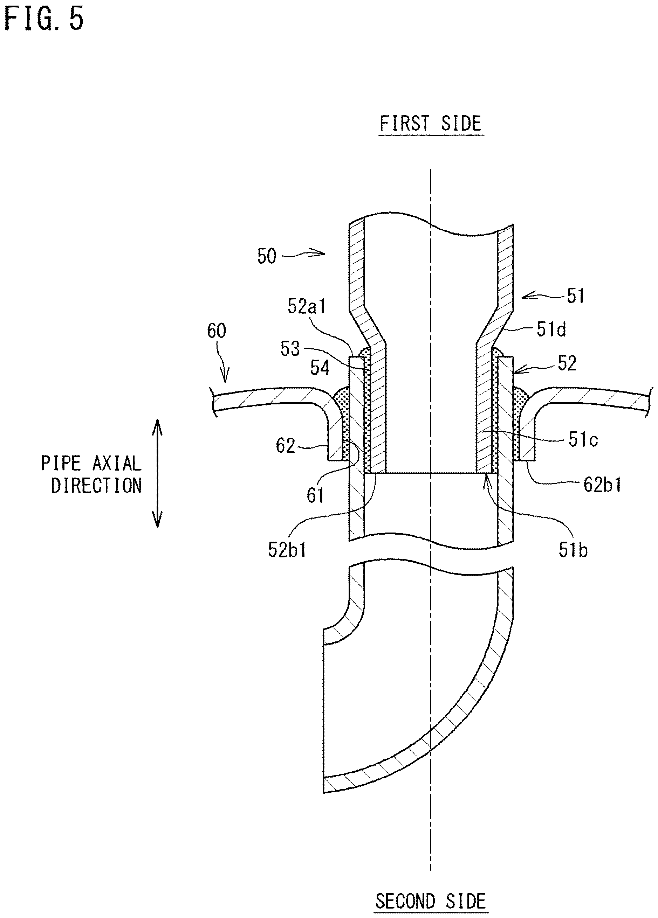

FIG. 5 is an enlarged sectional view of a connecting portion between a pipe and a vessel body of a pressure vessel according to the second embodiment.

The first pipe 50 according to the present embodiment is exemplarily applied to the inlet pipe 22 and the inner pipe 24 of the accumulator 16 depicted in FIG. 2. The second portion 52 of the first pipe 50 depicted in FIG. 5 is extended into the vessel body 60 than the second portion 52 of the first pipe 50 depicted in FIG. 4. In other words, the first pipe 50 projecting outward from the vessel body 60 also serves as an inner pipe of the vessel body 60. The present embodiment can thus achieve reduction in the number of constituent elements of the pressure vessel in comparison to a case where a different inner pipe is connected to the first pipe 50, for reduction in the number of components and cost reduction. The remaining configurations of the first pipe 50 are same as those according to the first embodiment.

### [Third embodiment]

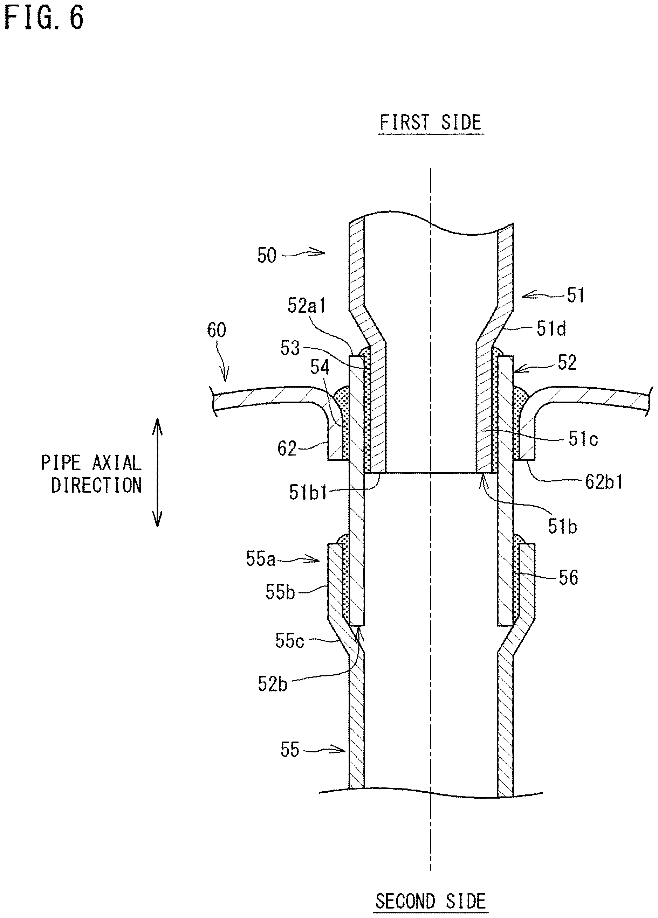

FIG. 6 is an enlarged sectional view of a connecting portion between a pipe and a vessel body of a pressure vessel according to the third embodiment.

The first pipe 50 according to the present embodiment is exemplarily applied to the outlet pipe 23 and the inner pipe 25 of the accumulator 16 depicted in FIG. 2. The second end 52b in the pipe axial direction of the second portion 52 depicted in FIG. 6 is connected with a different pipe (second pipe) 55. The second pipe 55 has a first end 55a in the pipe axial direction, which is provided with a major diameter portion 55b increased in outer diameter while a stepped portion 55c is interposed therebetween. The second end 52b in the pipe axial direction of the second portion 52 is inserted to the major diameter portion 55b of the second pipe 55. The outer circumferential surface of the second portion 52 faces an inner circumferential surface of the major diameter portion 55b in the pipe diameter direction. The outer circumferential surface of the second portion 52 and the inner circumferential surface of the major diameter portion 55b are brazed to each other. The outer circumferential surface of the second portion 52 and the inner circumferential surface of the major diameter portion 55b accordingly interpose a brazed portion 56 made of a brazing material.

The second pipe 55 is made of iron or the like. The second pipe 55 can thus be connected to the second portion 52 made of a material whose main component is copper, by burner brazing with use of the brass brazing material or the like. As depicted in FIG. 2, the inner pipe 25 of the vessel body 21 is bent into the U shape. If the inner pipe 25 and the outlet pipe 23 are provided integrally with each other, the inner pipe 25 cannot be substantially attached to the vessel body 21. According to the present embodiment as depicted in FIG. 6, the inner pipe of the vessel body 60 is constituted by the second pipe 55 provided separately from the first pipe 50, so that the first pipe 50 can be attached to the vessel body 60 from outside the vessel body 60 (the upper lid 21b in FIG. 2) and the second pipe 55 can be easily attached to the vessel body 60 from inside the vessel body 60 (the upper lid 21b in FIG. 2).

The second pipe 55 may not necessarily be made of iron, and may alternatively be made of a material whose main component is copper. In this case, the second pipe 55 can be connected easily to the second portion 52 by burner brazing or the like. The second pipe 55 may still alternatively be made of aluminum, aluminum alloy, or stainless steel. Note that the second pipe 55 made of iron leads to further cost reduction for production of the pressure vessel.

### [Fourth embodiment]

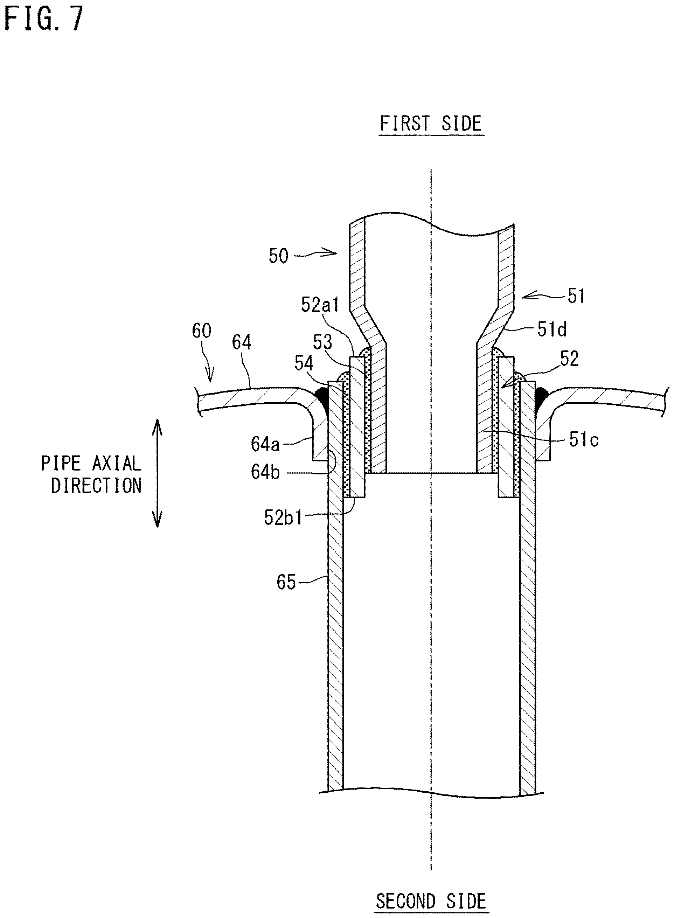

FIG. 7 is an enlarged sectional view of a connecting portion between a pipe and a vessel body of a pressure vessel according to the fourth embodiment.

The vessel body 60 of the pressure vessel according to the present embodiment includes a body 64 and a joint tube 65. The body 64 and the joint tube 65 are made of iron. The body 64 constitutes a primary part of the vessel body 60 and is configured to contain a refrigerant. The body 64 includes a sleeve 64a bent inward. The sleeve 64a has an inner circumferential surface constituting an opening 64b.

The j oint tube 65 is provided to attach the first pipe 50 to the vessel body 60. The joint tube 65 has a cylindrical shape. The joint tube 65 is inserted to the sleeve 64a. The joint tube 65 has an outer circumferential surface facing the inner circumferential surface of the sleeve 64a. The j oint tube 65 is attached to the sleeve 64a by welding. The j oint tube 65 extends into the body 64 to constitute the inner pipe of the vessel body 60.

The second portion 52 of the first pipe 50 is connected to the joint tube 65. Specifically, the outer circumferential surface of the second portion 52 is disposed to face an inner circumferential surface of the joint tube 65. The outer circumferential surface of the second portion 52 is brazed to the inner circumferential surface of the joint tube 65 with use of the brass brazing material or the like. The outer circumferential surface of the second portion 52 and the inner circumferential surface of the joint tube 65 accordingly interpose the brazed portion 54. The first portion 51 of the first pipe 50 is positioned to be overlapped with the joint tube 65 in the pipe diameter direction. The remaining configurations of the first pipe 50 are similar to those according to the first embodiment.

According to the present embodiment, the body 64 and the joint tube 65 of the vessel body 60 are firmly connected to each other by welding. The present embodiment is thus suitably applicable to a pressure vessel required to have high compressive resistance, like a compressor having large capacity (horsepower).

### [Fifth embodiment]

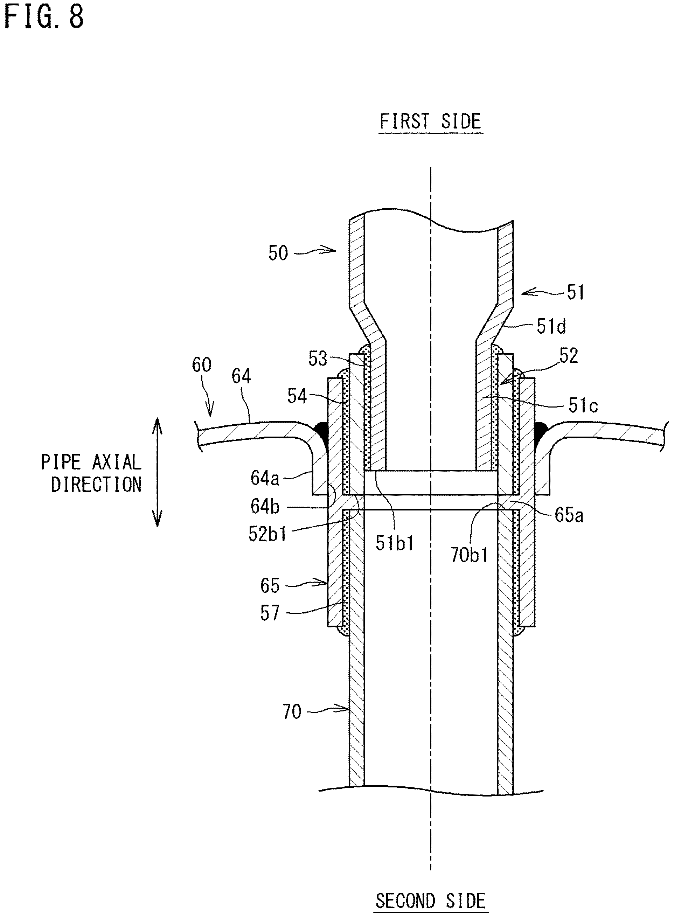

FIG. 8 is an enlarged sectional view of a connecting portion between a pipe and a vessel body of a pressure vessel according to the fifth embodiment.

As in the fourth embodiment, the vessel body 60 according to the present embodiment includes the body 64 and the joint tube 65. The joint tube 65 has a first end in the pipe axial direction, which is connected with the second portion 52 of the first pipe 50. The joint tube 65 has a second end in the pipe axial direction, which is connected with a different pipe (third pipe) 70.

The third pipe 70 is made of a material whose main component is copper (copper or copper alloy). The third pipe 70 has an outer circumferential surface facing the inner circumferential surface of the joint tube 65 in the pipe diameter direction. The outer circumferential surface of the third pipe 70 and the inner circumferential surface of the joint tube 65 are brazed to each other with use of the brass brazing material or the like. The outer circumferential surface of the third pipe 70 and the inner circumferential surface of the joint tube 65 interpose a brazed portion 57. The third pipe 70 may not necessarily be made of copper, and may alternatively be made of iron, stainless steel, aluminum, or aluminum alloy.

The inner circumferential surface of the joint tube 65 is provided with a protrusion 65a projecting radially inward. The protrusion 65a is provided continuously along the entire inner circumferential surface of the joint tube 65. The protrusion 65a is in contact with the second end surface 52b1 in the pipe axial direction of the second portion 52 of the first pipe 50 inserted to the joint tube 65. This configuration achieves positioning in the pipe axial direction of the first pipe 50 relative to the joint tube 65.

The protrusion 65a is in contact with a first end surface 70b1 in the pipe axial direction of the third pipe 70 inserted to the joint tube 65. This configuration achieves positioning in the pipe axial direction of the third pipe 70 relative to the joint tube 65.

The second end surface 52b1 in the pipe axial direction of the second portion 52 of the first pipe 50 is disposed closer to the second side in the pipe axial direction than the second end surface 5 1b 1 in the pipe axial direction of the first portion 51. This disposition achieves reliable contact between the second end surface 52b1 of the second portion 52 and the protrusion 65a. This also prevents any gap between the second portion 52 and the third pipe 70 in the pipe axial direction. If the second end surface 51b1 of the first portion 51 is disposed closer to the second side in the pipe axial direction than the second end surface 52b1 of the second portion 52, there may be provided a space not including the second portion 52, between the outer circumferential surface of the first portion 51 and the inner circumferential surface of the joint tube 65 in the pipe diameter direction. In such a case, the refrigerant may enter the space to generate unusual sound. The pressure vessel according to the present embodiment can avoid such defectiveness.

The protrusion 65a according to the present embodiment may not necessarily be provided along the entire inner circumferential surface of the joint tube 65, and may alternatively be provided at one circumferential point or at each of a plurality of points circumferentially spaced apart from each other.

### [Sixth embodiment]

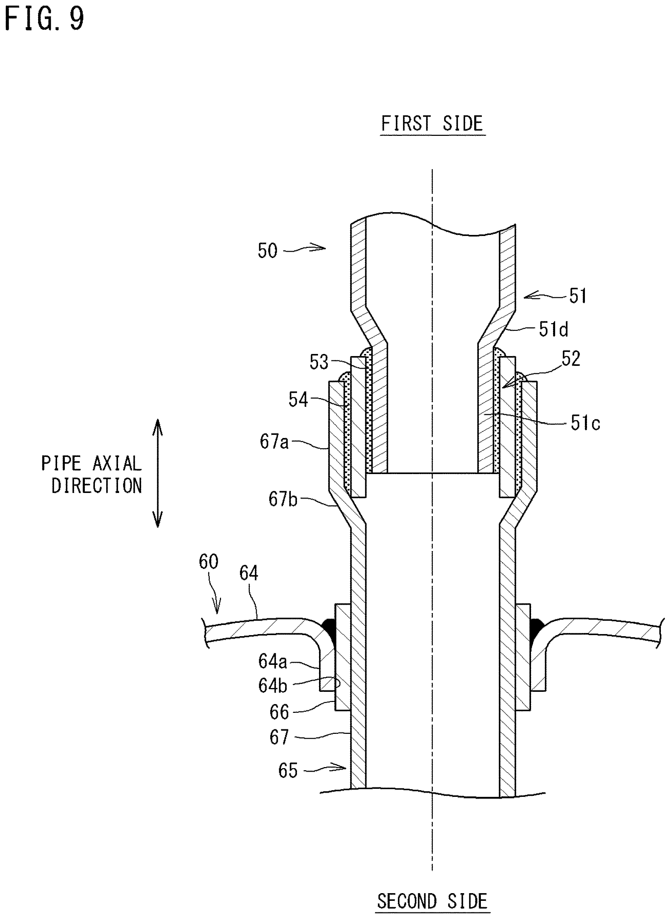

FIG. 9 is an enlarged sectional view of a connecting portion between a pipe and a vessel body of a pressure vessel according to the sixth embodiment.

As in the fourth embodiment, the vessel body 60 according to the present embodiment includes the body 64 and the joint tube 65. The second portion 52 of the first pipe 50 is connected to the joint tube 65. The joint tube 65 includes a first portion 66 and a second portion 67. The first portion 66 of the joint tube 65 has a cylindrical shape. The first portion 66 is inserted to the sleeve 64a of the body 64. The first portion 66 is joined to the sleeve 64a by welding.

The second portion 67 of the joint tube 65 has a cylindrical shape. The second portion 67 projects from both ends in the pipe axial direction of the first portion 66 of the joint tube 65. The first portion 66 and the second portion 67 of the joint tube 65 are connected to each other by brazing or welding. The second portion 67 has a first end in the pipe axial direction, which is provided with a major diameter portion 67a increased in outer diameter while a stepped portion 67b is interposed therebetween. The second portion 52 of the first pipe 50 is inserted to the major diameter portion 67a. The major diameter portion 67a has an inner circumferential surface, which is connected with the outer circumferential surface of the second portion 52 of the first pipe 50 by brazing or welding.

The joint tube 65 according to the present embodiment includes the first portion 66 and the second portion 67, so as to be effective in an exemplary case where the second portion 67 has an outer circumferential surface in a complicated shape inapplicable to a shape of the opening 64b of the body 64.

### [Other embodiments]

The embodiments described above exemplify the accumulator 16 and the compressor 12 as the pressure vessels that are not limited thereto and the examples of which may include the muffler 13 (see FIG. 1), the oil separator, and a receiver. The receiver is configured to reserve an excessive refrigerant, and is provided on the liquid pipe 10L between the outdoor heat exchanger 14 and the liquid shutoff valve 18L.

### [Action and effects of embodiments]

(1) As depicted in FIG. 2 and FIG. 3, the pressure vessel according to each of the above embodiments includes the vessel body 21 or 27 made of iron, the inlet pipe 22 or 28 causing the refrigerant to flow into the vessel body 21 or 27, and the outlet pipe 23 or 29 causing the refrigerant to flow out of the vessel body 21 or 27. As depicted exemplarily in FIG. 4, the first pipe 50 serving as at least one of the inlet pipe 22 or 28 and the outlet pipe 23 or 29 includes the first portion 51 made of stainless steel, the second portion 52 made of a material whose main component is copper, and the brazed portion 53 connecting the first portion 51 and the second portion 52. The first end 51a of the first portion 51 in the pipe axial direction of the first pipe 50 is disposed outside the vessel body 60. The second end 51b of the first portion 51 in the pipe axial direction of the first pipe 50 is connected to the second portion 52. The second portion 52 is connected to the vessel body 60.
   In the above configuration, the first pipe 50 (the inlet pipe 22 or 28 and/or the outlet pipe 23 or 29) includes the first portion 51 made of stainless steel and the second portion 52 made of a material whose main component is copper, and the second portion 52 is connected to the vessel body 60. The second portion 52 can thus be connected to the vessel body 60 in a manner similar to the conventional technique for the first pipe 50 made of copper. The first pipe 50 mostly made of inexpensive stainless steel can accordingly be connected easily to the vessel body 60 as in the conventional technique.
(2) In the first pipe 50 according to each of the above embodiments, the outer circumferential surface of the first portion 51 and the inner circumferential surface of the second portion 52 are connected to each other, the second end surface 52b1 in the pipe axial direction of the second portion 52 is disposed flush with the second end surface 51b1 in the pipe axial direction of the first portion 51 or projects toward the second side in the pipe axial direction than the second end surface 51b1 of the first portion 51. In this case, the first portion 51 does not project toward the second side in the pipe axial direction than the second portion 52, which leads to reduction in entire size of the first pipe 50. When the first portion 51 and the second portion 52 are furnace brazed to each other, a larger number of first pipes 50 can be brazed simultaneously for improvement in production efficiency.
(3) According to the third embodiment (see FIG. 6), the different second pipe 55 is connected to the second end 52b in the pipe axial direction of the second portion 52 of the first pipe 50. The second pipe 55, which may be bent into a U shape or the like, can accordingly be disposed easily in the vessel body 60.
(4) The vessel body 60 according to each of the fourth to sixth embodiments (see FIG. 7 to FIG. 9) includes the joint tube 65 made of iron and connected with the second portion 52. With the vessel body 60 including the joint tube 65 made of iron, a piping portion (the joint tube 65) can be connected firmly to the primary part (the body 64) of the vessel body 60, for higher compressive resistance and easy connection with the first pipe 50.
(5) In the fifth embodiment (see FIG. 8), the second portion 52 is connected to the first end in the pipe axial direction of the joint tube 65, and the different third pipe 70 is connected to the second end in the pipe axial direction of the joint tube 65. The first pipe 50 and the third pipe 70 disposed in the vessel body 60 can thus be connected to each other via the joint tube 65.
(6) In the fifth embodiment (see FIG. 8), the second end surface 52b1 in the pipe axial direction of the second portion 52 of the first pipe 50 projects toward the second side in the pipe axial direction than the second end surface 51b1 in the pipe axial direction of the first portion 51 of the first pipe 50. The second portion 52 and the third pipe 70 connected via the joint tube 65 are less likely to form any gap therebetween, inhibiting entry or the like of the refrigerant into the gap.
(7) In the second embodiment (see FIG. 5), the second portion 52 of the first pipe 50 has a portion extending into the vessel body 60. Accordingly, the inner pipe disposed in the vessel body 60 can be constituted by the second portion 52 thus extended, achieving reduction in the number of components of the first pipe 50 in comparison to the case where the inner pipe is constituted by a pipe provided separately from the first pipe 50.
(8) In the first portion 51 of the first pipe 50 according to each of the above embodiments, the second end in the pipe axial direction is provided with the minor diameter portion 51c reduced in outer diameter, and the outer circumferential surface of the minor diameter portion 51c is connected to the inner circumferential surface of the second portion 52 of the first pipe 50. Accordingly, the minor diameter portion 51c of the first portion 51 is inserted to the second portion 52 and the proximal end of the minor diameter portion 51c is made in contact with the end of the second portion 52, for positioning in the pipe axial direction between the first portion 51 and the second portion 52.
(9) The first portion 51 of the first pipe 50 according to each of the above embodiments has a portion overlapped with the vessel body 60 in the pipe diameter direction. When the first portion 51 of the first pipe 50 is overlapped with the vessel body 60 (the sleeve 62 or the joint tube 65) in the pipe diameter direction, the second portion 52 is not provided by itself, for improvement in connection strength between the vessel body 60 and the first pipe 50.
(10) In each of the above embodiments, the first end in the pipe axial direction of the first portion 51 of the first pipe 50 is provided with a plated portion made of a material whose main component is copper or a tube made of a material whose main component is copper. A refrigerant pipe made of copper can thus be connected easily to the end of the first portion 51 made of stainless steel, with use of an inexpensive brazing material.

### REFERENCE SIGNS LIST

- 1: refrigeration apparatus
- 4: refrigerant circuit
- 21: vessel body
- 22: inlet pipe
- 23: outlet pipe
- 27: vessel body
- 28: inlet pipe
- 29: outlet pipe
- 30: injection pipe
- 50: first pipe
- 51: first portion
- 51a: first end
- 51b: second end
- 51b1: second end surface
- 51c: minor diameter portion
- 52: second portion
- 52b: second end
- 52b1: second end surface
- 53: brazed portion
- 55: second pipe
- 60: vessel body
- 65: joint tube
- 70: third pipe

## Claims

1. A pressure vessel providable on a refrigerant circuit (4),
the pressure vessel comprising a vessel body (60) made of iron, an inlet pipe causing a refrigerant to flow into the vessel body (60), and an outlet pipe causing the refrigerant to flow out of the vessel body (60), wherein
a pipe (50) corresponding to at least one of the inlet pipe and the outlet pipe includes a first portion (51) made of stainless steel, a second portion (52) made of a material whose main component is copper, and a brazed portion (53) connecting the first portion (51) and the second portion (52),
the first portion (51) has an end (51a) on a first side in a pipe axial direction of the pipe (50), the end (51a) being disposed outside the vessel body (60),
the first portion (51) has an end (51b) on a second side in the pipe axial direction, the end (51b) being connected to the second portion (52), and
the second portion (52) is connected to the vessel body (60).

2. The pressure vessel according to claim 1, wherein
the first portion (51) has an outer circumferential surface connected with an inner circumferential surface of the second portion (52), and
the second portion (52) has an end surface (52b1) on the second side in the pipe axial direction, the end surface (52b1) being disposed flush with an end surface (51b1) on the second side in the pipe axial direction of the first portion (51), or projecting toward the second side in the pipe axial direction than the end surface (51b1) of the first portion (51).

3. The pressure vessel according to claim 1 or 2, wherein a different second pipe (55) is connected to an end (52b) on the second side in the pipe axial direction of the second portion (52).

4. The pressure vessel according to any one of claims 1 to 3, wherein
the vessel body (60) includes a joint tube (65) made of iron, and
the second portion (52) is connected to the joint tube (65).

5. The pressure vessel according to claim 4, wherein
the second portion (52) is connected to an end on the first side in the pipe axial direction of the joint tube (65), and
a different third pipe (70) is connected to an end on the second side in the pipe axial direction of the joint tube (65).

6. The pressure vessel according to claim 5, wherein the end surface (52b1) on the second side in the pipe axial direction of the second portion (52) projects toward the second side in the pipe axial direction than the end surface (51b1) on the second side in the pipe axial direction of the first portion (51).

7. The pressure vessel according to any one of claims 1 to 6, wherein the second portion (52) has a portion extending into the vessel body (60).

8. The pressure vessel according to any one of claims 1 to 7, wherein
the end (51b) on the second side in the pipe axial direction of the first portion (51) is provided with a minor diameter portion (5 1c) reduced in outer diameter, and
the minor diameter portion (5 1c) has an outer circumferential surface connected to the inner circumferential surface of the second portion (52).

9. The pressure vessel according to any one of claims 1 to 8, wherein the first portion (51) has a portion overlapped with the vessel body (60) in a pipe diameter direction.

10. The pressure vessel according to any one of claims 1 to 9, wherein the end (5 1a) on the first side in the pipe axial direction of the first portion (51) is provided with a plated portion (51g) made of a material whose main component is copper or a tube made of a material whose main component is copper.

11. A refrigeration apparatus comprising the pressure vessel according to any one of claims 1 to 10.

## Patentansprüche

1. Druckbehälter, der an einem Kältemittelkreislauf (4) bereitgestellt werden kann,
der Druckbehälter umfassend einen Behälterkörper (60), der aus Eisen gefertigt ist, ein Einlassrohr, das bewirkt, dass ein Kältemittel in den Behälterkörper (60) strömt, und ein Auslassrohr, das bewirkt, dass das Kältemittel aus dem Behälterkörper (60) herausströmt, wobei
ein Rohr (50), das mindestens einem von dem Einlassrohr und dem Auslassrohr entspricht, einen ersten Abschnitt (51), der rostfreiem Stahl gefertigt ist, einen zweiten Abschnitt (52), der aus einem Material gefertigt ist, dessen Hauptbestandteil Kupfer ist, und einen gelöteten Abschnitt (53), der den ersten Abschnitt (51) und den zweiten Abschnitt (52) verbindet, einschließt,
der erste Abschnitt (51) in einer Rohraxialrichtung des Rohrs (50) auf einer ersten Seite ein Ende (51a) aufweist, wobei das Ende (51a) außerhalb des Behälterkörpers (60) angeordnet ist,
der erste Abschnitt (51) in der Rohraxialrichtung auf einer zweiten Seite ein Ende (51b) aufweist, wobei das Ende (51b) mit dem zweiten Abschnitt (52) verbunden ist, und der zweite Abschnitt (52) mit dem Behälterkörper (60) verbunden ist.

2. Druckbehälter nach Anspruch 1, wobei
der erste Abschnitt (51) eine äußere Umfangsfläche aufweist, die mit einer inneren Umfangsfläche des zweiten Abschnitts (52) verbunden ist, und
der zweite Abschnitt (52) in der Rohraxialrichtung auf der zweiten Seite eine Endfläche (52b1) aufweist, wobei die Endfläche (52b1) in der Rohraxialrichtung des ersten Abschnitts (51) auf der zweiten Seite bündig mit einer Endfläche (51b1) angeordnet ist oder in der Rohraxialrichtung in Richtung zu der zweiten Seite über die Endfläche (51b1) des ersten Abschnitts (51) herausragt.

3. Druckbehälter nach Anspruch 1 oder 2, wobei ein anderes zweites Rohr (55) in der Rohraxialrichtung des zweiten Abschnitts (52) auf der zweiten Seite mit einem Ende (52b) verbunden ist.

4. Druckbehälter nach einem der Ansprüche 1 bis 3, wobei
der Behälterkörper (60) ein Verbindungsrohr (65) einschließt, das aus Eisen gefertigt ist, und
der zweite Abschnitt (52) mit dem Verbindungsrohr (65) verbunden ist.

5. Druckbehälter nach Anspruch 4, wobei
der zweite Abschnitt (52) in der Rohraxialrichtung des Verbindungsrohrs (65) auf der ersten Seite mit einem Ende verbunden ist, und
ein anderes drittes Rohr (70) in der Rohraxialrichtung des Verbindungsrohrs (65) auf der zweiten Seite mit einem Ende verbunden ist.

6. Druckbehälter nach Anspruch 5, wobei die Endfläche (52b1) in der Rohraxialrichtung des zweiten Abschnitts (52) auf der zweiten Seite in der Rohraxialrichtung in Richtung zu der zweiten Seite in der Rohraxialrichtung des ersten Abschnitts (51) auf der zweiten Seite über die Endfläche (51b1) herausragt.

7. Druckbehälter nach einem der Ansprüche 1 bis 6, wobei der zweite Abschnitt (52) einen Abschnitt aufweist, der sich in den Behälterkörper (60) erstreckt.

8. Druckbehälter nach einem der Ansprüche 1 bis 7, wobei
das Ende (51b) in der Rohraxialrichtung des ersten Abschnitts (51) auf der zweiten Seite mit einem Abschnitt (51c) kleineren Durchmessers, dessen Außendurchmesser reduziert ist, bereitgestellt ist, und
der Abschnitt (51c) kleineren Durchmessers eine äußere Umfangsfläche aufweist, die mit der inneren Umfangsfläche des zweiten Abschnitts (52) verbunden ist.

9. Druckbehälter nach einem der Ansprüche 1 bis 8, wobei der erste Abschnitt (51) einen Abschnitt aufweist, der sich in einer Rohrdurchmesserrichtung mit dem Behälterkörper (60) überlappt.

10. Druckbehälter nach einem der Ansprüche 1 bis 9, wobei das Ende (51a) in der Rohraxialrichtung des ersten Abschnitts (51) auf der ersten Seite mit einem plattierten Abschnitt (51g), der aus einem Material gefertigt ist, dessen Hauptbestandteil Kupfer ist, oder mit einem Rohr, das aus einem Material gefertigt ist, dessen Hauptbestandteil Kupfer ist, bereitgestellt ist.

11. Kühleinrichtung, umfassend den Druckbehälter nach einem der Ansprüche 1 bis 10.

## Revendications

1. Récipient sous pression pouvant être agencé sur un circuit (4) de réfrigérant,
le récipient sous pression comprenant un corps (60) de récipient constitué de fer,
un tuyau d'entrée provoquant l'écoulement d'un réfrigérant dans le corps (60) de récipient, et un tuyau de sortie provoquant l'écoulement du réfrigérant hors du corps (60) de récipient, dans lequel
un tuyau (50) correspondant à au moins l'un du tuyau d'entrée et du tuyau de sortie inclut une première partie (51) constituée d'acier inoxydable, une seconde partie (52) constituée d'un matériau dont le composant principal est du cuivre, et une partie brasée (53) reliant la première partie (51) et la seconde partie (52),
la première partie (51) présente une extrémité (51a) sur un premier côté dans une direction axiale de tuyau du tuyau (50), l'extrémité (51a) étant disposée à l'extérieur du corps (60) de récipient,
la première partie (51) présente une extrémité (51b) sur un second côté dans la direction axiale de tuyau, l'extrémité (51b) étant reliée à la seconde partie (52), et
la seconde partie (52) est reliée au corps (60) de récipient.

2. Récipient sous pression selon la revendication 1, dans lequel
la première partie (51) présente une surface circonférentielle extérieure reliée à une surface circonférentielle intérieure de la seconde partie (52), et
la seconde partie (52) présente une surface (52b1) d'extrémité sur le second côté dans la direction axiale de tuyau, la surface (52b1) d'extrémité étant disposée à fleur d'une surface (51b1) d'extrémité sur le second côté dans la direction axiale de tuyau de la première partie (51), ou faisant saillie vers le second côté dans la direction axiale de tuyau par rapport à la surface (51b1) d'extrémité de la première partie (51).

3. Récipient sous pression selon la revendication 1 ou la revendication 2, dans lequel un deuxième tuyau différent (55) est relié à une extrémité (52b) sur le second côté dans la direction axiale de tuyau de la seconde partie (52).

4. Récipient sous pression selon l'une quelconque des revendications 1 à 3, dans lequel
le corps (60) de récipient inclut un tube de jonction (65) constitué de fer, et
la seconde partie (52) est reliée au tube de jonction (65).

5. Récipient sous pression selon la revendication 4, dans lequel
la seconde partie (52) est reliée à une extrémité sur le premier côté dans la direction axiale de tuyau du tube de jonction (65), et
un troisième tuyau différent (70) est relié à une extrémité sur le second côté dans la direction axiale de tuyau du tube de jonction (65).

6. Récipient sous pression selon la revendication 5, dans lequel la surface (52b1) d'extrémité sur le second côté dans la direction axiale de tuyau de la seconde partie (52) fait saillie vers le second côté dans la direction axiale de tuyau par rapport à la surface (51b1) d'extrémité sur le second côté dans la direction axiale de tuyau de la première partie (51).

7. Récipient sous pression selon l'une quelconque des revendications 1 à 6, dans lequel la seconde partie (52) présente une partie s'étendant dans le corps (60) de récipient.

8. Récipient sous pression selon l'une quelconque des revendications 1 à 7, dans lequel
l'extrémité (51b) sur le second côté dans la direction axiale de tuyau de la première partie (51) est pourvue d'une partie (51c) de diamètre mineur ayant un diamètre extérieur réduit, et
la partie (51c) de diamètre mineur présente une surface circonférentielle extérieure reliée à une surface circonférentielle intérieure de la seconde partie (52).

9. Récipient sous pression selon l'une quelconque des revendications 1 à 8, dans lequel la première partie (51) présente une partie chevauchée par le corps (60) de récipient dans une direction de diamètre de tuyau.

10. Récipient sous pression selon l'une quelconque des revendications 1 à 9, dans lequel l'extrémité (51a) sur le premier côté dans la direction axiale de tuyau de la première partie (51) est pourvue d'une partie plaquée (51g) constituée d'un matériau dont le composant principal est du cuivre ou d'un tube constitué d'un matériau dont le composant principal est du cuivre.

11. Appareil de réfrigération comprenant le récipient sous pression selon l'une quelconque des revendications 1 à 10.
